# EUROPÄISCHE PATENTSCHRIFT

(11) **EP 2 738 636 B1**
(45) Veröffentlichungstag und Bekanntmachung des Hinweises auf die Patenterteilung: **25.12.2019**
(21) Anmeldenummer: 13193504.1
(22) Anmeldetag: 19.11.2013
(51) Int. Cl.: G05B 19/418, B65G 49/06, B65G 1/137, C03B 33/02, C03B 33/037

(54) **Verfahren zum Herstellen von Flachglasscheiben und Flachglasscheibenfertigungsanlage**
Method for producing flat glass sheets and flat glass sheet manufacturing system
Procédé de fabrication de vitres en verre plat et installation de fabrication de vitres en verre plat

(30) Priorität: 29.11.2012 DE 102012023266
(43) Veröffentlichungstag der Anmeldung: 04.06.2014
(73) Patentinhaber: Waldemar Knittel Glasbearbeitungs GmbH, 38114 Braunschweig (DE); Glaswerke Arnold GmbH & Co. KG, 73630 Remshalden (DE)
(72) Erfinder: Jess, Manuel, 73630 Remshalden (DE); Günther, Jochen, 33824 Werther (DE); Arnold, Hans-Joachim, 73630 Remshalden (DE)
(74) Vertreter: Plöger, Jan Manfred

(56) Entgegenhaltungen:
- EP-A1- 1 431 215
- EP-A1- 1 900 695
- EP-A2- 1 319 634
- EP-A2- 1 452 462
- JP-A- 2006 076 794
- US-A1- 2003 226 433
- US-A1- 2007 112 451

## Beschreibung

Die Erfindung betrifft ein Verfahren zum Herstellen von Flachglasscheiben. Flachglasscheiben sind insbesondere Verbund-Sicherheitsglas, Isolierglas oder Einscheiben-Sicherheitsglas. Besonders geeignet ist das Verfahren für die Herstellung von Isolierglasscheiben. Diese bestehen aus zwei, drei oder mehr Glasscheiben, die planparallel zueinander beabstandet untereinander verbunden sind. Derartige Isolierglasscheiben werden vom Markt in einer großen Formenvielfalt nachgefragt. Die einzelnen Glasscheiben werden standardmäßig im Format 6000 mm x 3210 mm hergestellt.

Bei der Fertigung von Flachglasscheiben ergibt sich das Problem, dass die gelieferten Rohlinge in dem angegebenen Format so zugeschnitten werden sollen, dass ein möglichst geringer Verschnitt entsteht. Gleichzeitig ist eine Vielzahl an Randbedingungen einzuhalten. Beispielsweise müssen für jeden Auftrag, der sich auf eine Mehrzahl von Flachglasscheiben bezieht, Lieferzeiten eingehalten werden. Damit die einzelnen Flachglasscheiben, die zu einem Auftrag gehören, beim Transport nicht beschädigt werden, müssen sie zudem in der korrekten Reihenfolge auf dem Transportgestell angeordnet werden.

Um diesen Anforderungen gerecht zu werden, ist es aus dem Stand der Technik bekannt, zunächst ein verschnittminimiertes Schnittmuster für die Glasscheiben von mehreren Fertigungsaufträgen zu berechnen und die Glasscheiben dann aus den Rohlingen herzustellen. Die so erhaltenen Glasscheiben werden in ein Lager eingelagert, das eine fixe Anzahl an Lagerplätzen besitzt. Sobald hinreichend viele Glasscheiben in diesem Lager eingelagert sind, beispielsweise zumindest 90 % aller benötigten Glasscheiben, wird damit begonnen, die einzelnen Glasscheiben aus dem Lager zu entnehmen und einer Flachglasscheibenfertigungsvorrichtung zuzuführen. Dort werden die Glasscheiben miteinander zu der Flachglasscheibe verbunden. Die fertige Flachglasscheibe wird dann direkt auf ein Transportgestell verbracht und an den Kunden ausgeliefert.

Wie oben ausgeführt, müssen die einzelnen Glasscheiben so aus dem Lager entnommen werden, dass die daraus gefertigten Flachglasscheiben in der richtigen Reihenfolge auf das Transportgestell gesetzt werden können. Es ist zudem sicherzustellen, dass alle Flachglasscheiben, die zu einem Gesamtauftrag gehören, so rechtzeitig gefertigt werden, dass die jeweilige Terminvorgabe für diesen Gesamtauftrag eingehalten wird. Es existieren Programme, die eine Unterstützung dabei bieten diese Forderungen umzusetzen. Wegen der Komplexität der Anforderungen ist es bislang jedoch nicht möglich, die Fertigung von Flachglasscheiben vollständig zu automatisieren.

Nachteilig an der bisherigen Art, Flachglasscheiben zu fertigen, ist zudem die Tatsache, dass das Lager, das die einzelnen Glasscheiben aufnimmt, eine fixe Zahl an Lagerplätzen besitzt. Es muss daher bei der Planung der Flachglasfertigungsanlage die Kapazität dieses Lagers festgelegt werden. Wird das Lager zu klein gewählt, müssen Glasscheiben bei der Berechnung des verschnittminimierten Schnittmusters berücksichtigt werden, die zum Abarbeiten eines Gesamtauftrages notwendig sind, obwohl das resultierende verschnittminimierte Schnittmuster suboptimal ist gegenüber einem Schnittmuster, das erhalten werden könnte, wenn Glasscheiben zu einem anderen Gesamtauftrag verwendet werden könnten. Ein zu kleines Lager führt damit zu mehr Verschnitt. Ist das Lager andererseits zu groß gewählt, bindet dies unerwünschter Weise finanzielle Ressourcen. Es muss daher sichergestellt werden, dass dieses Lager genau die richtige Größe hat, was nur schwer möglich ist.

Aus der US 2007/0112451 A1 ist ein Verfahren zum Herstellen von in Rahmen und in Türen eingesetzten Isolierglasscheiben bekannt, bei dem die einzelnen Scheiben zunächst gebrochen und danach zu Isolierglasscheiben verarbeitet werden. Danach werden die Scheiben sukzessive und nach Aufträgen geordnet auf Lagerböcken angeordnet. Die Lagerböcke werden zu einzelnen Verglasungsstraßen gefahren, so dass sich eine optisch wahrnehmbare Kanbaneinheit ergibt. Nachteilig an diesem Verfahren ist, dass es sich nicht für Aufträge eignet, bei denen unterschiedliche Scheibengeometrien in einem Gesamtauftrag in einer vorgegebenen Reihenfolge auf ein Transportgestell abgelagert werden müssen. Das in der Druckschrift beschriebene Verfahren führt in diesem Fall zu beträchtlichem Verschnitt.

Aus der WO 2009/055135 A2 ist ein Verfahren zur Herstellung von Glas bekannt, das in einem Ofen getempert wird. Die einzelnen Scheiben werden in einem fahrbaren Lager zugeführt, das mehrere Glasscheiben aufnehmen kann. Nach dem Tempern können die Scheiben in einer anderen Reihenfolge auf weitere Transportfahrzeuge umgesetzt werden. Angaben über ein verschnittoptimiertes Herstellen von Glasscheiben werden in der Druckschrift nicht gemacht.

In der EP 1 900 695 A1 ist ein Verfahren zum Zuschneiden von Rohglasplatten beschrieben, bei dem kontinuierlich die optimierte Bearbeitungsreihenfolge berechnet wird. Bei diesem Verfahren wird die Reihenfolge nicht berücksichtigt, mit der die Flachglasscheiben auf dem Transportgestell angeordnet werden müssen.

Die EP 1 319 634 A3 befasst sich ebenfalls mit einem Verfahren zum Teilen von Glasplatten in Zuschnitte, bei denen die einzelnen Zuschnitte in Zwischenpuffer abgelegt werden. Bei diesem Verfahren wird die Bearbeitungsreihenfolge so gewählt, dass Folgeprozesse nach dem Brechen optimal mit Material versorgt werden. Die Reihenfolge, mit der die Flachglasscheiben auf dem Transportgestell angeordnet werden müssen, wird auch dabei nicht betrachtet.

Ein weiteres Verfahren zum Beschicken einer Glasverarbeitungsanlage ist aus der EP 1 431 215 A1 bekannt, bei dem eine Speichereinheit verwendet wird, in die einzelne Glasplattenteile ein- und ausgelagert werden. Ein derartiger stationärer Speicher ist bei dem erfindungsgemäßen Verfahren entbehrlich. Die Reihenfolge der Flachglasscheiben auf dem Transportgestell wird auch in dieser Druckschrift nicht diskutiert.

Der Erfindung liegt die Aufgabe zugrunde, den Verschnitt bei der Abarbeitung von Gesamtaufträgen von Flachglasscheiben zu verbessern, bei denen die Reihenfolge der Flachglasscheiben einzuhalten ist.

Die Erfindung löst das Problem durch ein Verfahren nach Anspruch 1 und einer Flachglasscheibenfertigungsanlage nach Anspruch 11.

Vorteilhaft an der Erfindung ist, dass die Menge aller Glasscheiben, die zur Optimierung des Schnittmusters zur Verfügung stehen, größer gewählt werden kann. Es entfallen nämlich Randbedingungen bei der Berechnung des Schnittmusters. Beispielsweise muss nicht mehr auf eine begrenzte Lagerkapazität eines Lagers hinter der Brechvorrichtung Rücksicht genommen werden. Dadurch wird der Verschnitt verringert.

Auch ist es vorteilhaft, dass die Flachglasscheiben gelagert werden, nicht aber die Glasscheiben, aus denen die Flachglasscheibe erst aufzubauen ist. Das ist besonders vorteilhaft, wenn die Flachglasscheiben, wie in einer bevorzugten Ausführungsform vorgesehen, aus zumindest zwei Glasscheiben aufgebaut sind und insbesondere Isolierglasscheiben sind. Das gibt dem Kitt, der bei der Herstellung der Isolierglasscheiben verwendet wird, die Möglichkeit auszuhärten, so dass die Isolierglasscheiben beim letztendlichen Transport zum Kunden eine höhere Festigkeit besitzen und daher mit geringerer Wahrscheinlichkeit beschädigt werden.

Vorteilhaft ist zudem, dass die Zahl der Lagerböcke weitgehend frei skalierbar ist. Sofern also die Zahl der abzuarbeitenden Gesamtaufträge ansteigt, kann die Lagerkapazität durch zusätzliche Lagerböcke erhöht werden.

Vorteilhaft ist zudem, dass das Verfahren fehlertolerant ist. Dadurch, dass die Flachglasscheibe im fertigen Zustand gelagert wird, können etwaige Fehler schnell erkannt werden. Es bleibt zudem in aller Regel genug Zeit, um die Flachglasscheibe nachzufertigen.

Es ist ein weiterer Vorteil, dass die gefertigten Flachglasscheiben eine besonders hohe Qualität haben, wenn zumindest eine der Glasscheiben, aus denen die Flachglasscheibe aufgebaut ist, eine Beschichtung aufweist, die in der späteren Flachglasscheibe zum Zwischenraum zwischen den Glasscheiben weist. Diese Beschichtungen oxidieren und altern durch Luftsauerstoff. Dadurch, dass die Glasscheiben nur kurze Zeit alleine zwischengelagert werden müssen, altern sie nur wenig. Gemäß einer bevorzugten Ausführungsform ist vorgesehen, dass eine Glasscheibe, die eine zum Zwischenraum zwischen den Glasscheiben weisende Beschichtung hat, erst dann hergestellt wird, wenn die weiteren Glasscheiben, die zu Herstellung der Flachglasscheibe benötigt werden, hergestellt sind.

Im Rahmen der vorliegenden Beschreibung wird unter einem Fertigungsauftrag insbesondere ein Datensatz verstanden, der die Maße einer herzustellenden Flachglasscheibe, gegebenenfalls nebst einem Enddatum und/oder einem Bestimmungsort und/oder einem Auftraggeber, kodiert.

Unter einem Gesamtauftrag wird eine Menge an Fertigungsaufträgen verstanden, die auf einem gemeinsamen Transportgestell angeordnet werden müssen. In dem Gesamtauftrag ist eine Reihenfolge kodiert, mit der die Flachglasscheiben der einzelnen Fertigungsaufträge auf dem Transportgestell angeordnet werden müssen. In anderen Worten ist nicht jeder Datensatz, der eine Mehrzahl an Fertigungsaufträgen enthält, automatisch ein Gesamtauftrag, vielmehr stellt die Reihenfolge der Flachglasscheiben eine technische Anforderung an die Datenstruktur des Gesamtauftrages dar.

Unter dem Schritt des Berechnens eines verschnittminimierten Schnittmusters aus den Fertigungsaufträgen wird insbesondere verstanden, dass automatisch eine Anordnung der Glasscheiben ermittelt wird, die den Verschnitt minimiert. Das Berechnen eines verschnittminimierten Schnittmusters ist ein im mathematischen Sinne NP-schweres Problem, das heißt, dass es in der Regel nur näherungsweise zu lösen ist. Unter dem verschnittminimierten Schnittmuster wird daher insbesondere jedes Schnittmuster verstanden, das in Bezug auf minimalen Verschnitt optimiert wurde, selbst wenn das gefundene Optimum nicht dem theoretischen Optimum entspricht, das unter Aufwendung unendlich großer Rechenleistung erzielt werden könnte.

Gemäß einer bevorzugten Ausführungsform wird das verschnittminimierte Schnittmuster für alle Glasscheiben berechnet, die zu zumindest im Wesentlichen allen Fertigungsaufträgen gehören, die zum Berechnungszeitpunkt vorliegen und/oder die in einem vorgegebenen Zeitintervall fertig zu stellen sind. Es ist damit zwar möglich, dass einige wenige Fertigungsaufträge nicht für die Berechnung des verschnittminimierten Schnittmusters herangezogen werden, ein besonders geringer Verschnitt ergibt sich jedoch, wenn alle Glasscheiben, die zu den zu fertigenden Flachglasscheiben gehören, für die Berechnung des verschnittminimierten Schnittmusters hinzugezogen werden. Insbesondere werden höchstens 10% der zum Berechnungszeitpunkt vorliegenden Fertigungsaufträge nicht zur Berechnung des verschnittminimierten Schnittmusters verwendet.

Das Verfahren umfasst vorzugsweise den Schritt, die Flachglasscheiben bis zum Ende des vorgegebenen Zeitintervalls auf dem Transportgestell anzuordnen. Damit ist der Gesamtauftrag abgearbeitet und die Flachglasscheiben können ausgeliefert werden.

Gemäß einer bevorzugten Ausführungsform erfolgt das Berechnen des verschnittminimierten Schnittmusters ohne Randbedingung in Form des Auslieferungsdatums. Das Auslieferungsdatum ist dasjenige Datum, zu dem eine Flachglasscheibe spätestens ausgeliefert werden muss. Durch den Wegfall dieser Randbedingung kann ein geringerer Verschnitt erzielt werden.

Unter dem Fertigen der Flachglasscheiben wird das Verbinden von zumindest zwei Glasscheiben, insbesondere unter Verwendung eines Abstandshalters und/oder von Dichtkitt, verstanden.

Gemäß einer bevorzugten Ausführungsform erfolgt das Fertigen der Flachglasscheiben unmittelbar nach dem Brechen der Glasscheiben. Hierunter wird insbesondere verstanden, dass das Fertigen der Flachglasscheiben ohne Zwischenlagerung in einem Zwischenlager, dessen Kapazität größer ist als die Lagerkapazität der Lagerböcke und insbesondere größer ist als die Hälfte der Lagerkapazität der Lagerböcke, erfolgt.

Selbstverständlich kann es notwendig sein, einige Glasscheiben nach dem Brechen zwischenzulagern, weil für die Fertigung einer Flachglasscheibe notwendige Glasscheiben aus unterschiedlichen Rohlingen gebrochen werden. Es ist jedoch bevorzugt, dass eine Glasscheibe, die zum Herstellen einer Flachglasscheibe verwendet wird, nur so lange zwischengelagert wird, bis alle Glasscheiben gebrochen sind, die zum Herstellen der Flachglasscheibe benötigt werden. Ist das der Fall, werden die Glasscheiben ausgelagert und die Flachglasscheibe hergestellt.

Insbesondere wird das Verfahren so durchgeführt, dass eine Flachglasscheibe unmittelbar dann gefertigt wird, wenn alle zur Herstellung notwendigen Glasscheiben gebrochen sind. Das minimiert die Größe des etwaig notwendigen Zwischenlagers.

Gemäß einer bevorzugten Ausführungsform erfolgt das Berechnen des verschnittminimierten Schnittmusters ohne Randbedingung mit Bezug auf einen Lagerfüllgrad eines Zwischenlagers im Materialfluss nach dem Brechen der Glasscheiben und dem Fertigen der Flachglasscheiben. Bei bisherigen Verfahren führt die endliche Größe des Zwischenlagers dazu, dass bei zu stark gefülltem Zwischenlager zunächst solche Glasscheiben hergestellt werden müssen, die mit im Zwischenlager bereits gespeicherten Glasscheiben zu einer Flachglasscheibe verbunden werden können, um das Zwischenlager teilweise zu leeren. Das aber stellt eine zusätzliche Randbedingung bei der Berechnung des verschnittminimierten Schnittmusters dar, was zu vermehrtem Verschnitt führt. Da im Rahmen des erfindungsgemäßen Verfahrens das etwaig vorhandene Zwischenlager nur in theoretischen Ausnahmefällen in einen derartigen Zustand kommen kann, ist diese Randbedingung entbehrlich. Das führt zu einem besonders geringen Verschnitt.

Gemäß einer bevorzugten Ausführungsform umfasst das Zusammenstellen der Flachglasscheiben die Schritte eines Bewegens der Lagerböcke zu einer Kommissioniervorrichtung, eines Entnehmens der Flachglasscheiben von den Lagerböcken und eines Lagerns der Flachglasscheiben auf zumindest einem Transportgestell. Bei diesem Transportgestell handelt es sich insbesondere um ein sogenanntes A-Gestell, das seinen Namen aufgrund seiner Form trägt. Das Transportgestell bezeichnet diejenige Vorrichtung, mittels der die Flachglasscheiben zum Endabnehmer transportiert werden und ist insbesondere Teil eines Landfahrzeugs, insbesondere eines Lkw.

Das Zusammenstellen der Flachglasscheiben umfasst die folgenden Schritte:
(f1) Andocken von zumindest drei Transportgestellen an der Kommissioniervorrichtung und Erfassen der zu den Transportgestellen gehörenden Gesamtaufträge,
(f2) sukzessives Entnehmen der jeweiligen Flachglasscheiben, die zu einem der Fertigungsaufträge gehören, von dem zugeordneten Lagerbock, und Lagern auf dem entsprechenden Transportgestell, so dass für jedes Transportgestell eine vorgegebenen Reihenfolge der Flachglasscheiben eingehalten wird,
(f3) wenn für keines der Transportgestelle die jeweils nächste Flachglasscheibe auf einem Lagerbock, der an der Kommissioniervorrichtung bereitgestellt ist, vorhanden ist, Ausdocken eines der Transportgestelle und Andocken des Transportgestells, das eine Flachglasscheibe trägt, die für ein Transportgestell die nächste Flachglasscheibe ist, und Entnehmen dieser Flachglasscheibe und Lagern auf dem Transportgestell.

In anderen Worten werden die Transportgestelle so lange mit Flachglasscheiben in der vorgegebenen Reihenfolge bestückt, bis auf keinem der Lagerböcke mehr eine Flachglasscheibe vorhanden ist, die auf eines der Transportgestelle gelagert werden könnte, ohne die vorgegebene Reihenfolge zu verletzen. In diesem Fall wird ein Lagerbock herbeigeschafft, auf dem eine benötigte Flachglasscheibe lagert. Auf diese Weise kann das Zusammenstellen der Transportgestelle vollständig per Handhabungsroboter durchgeführt werden.

Gemäß einer bevorzugten Ausführungsform erfolgt das Zwischenlagern der Flachglasscheiben auf einem Lagerbock, der zumindest eine Stütze, die unter einem Winkel von höchstens 10° zur Vertikalen verläuft, und eine Auflage, die senkrecht zur Stütze verläuft, aufweist. Ein derartiger Lagerbock besitzt einerseits eine hohe Lagerkapazität und gestattet zudem ein sicheres Aushärten der Verbindung zwischen den einzelnen Glasscheiben.

Vorzugsweise besitzt der Lagerbock eine Mehrzahl an Stützen und das Zwischenlagern wird so durchgeführt, dass höchstens eine Flachglasscheibe auf einer Stütze angeordnet wird. Das erlaubt einen direkten und schnellen Zugriff. Bei bisherigen Zwischenlagern werden stets mehrere Glasscheiben auf einem Lagerplatz gelagert. Soll dann eine Glasscheibe ausgelagert werden, müssen zunächst die davor oder darüber gelagerten Glasscheiben entfernt und danach wieder eingelagert werden.

Vorzugsweise werden Flachglasscheiben gefertigt, die aus zumindest zwei Glasscheiben aufgebaut sind. In diesem Fall müssen bei Verfahren nach dem Stand der Technik die einzelnen Glasscheiben nach dem Brechen und vor dem Verbinden der Glasscheiben zur Flachglasscheibe zwischengelagert werden, was aufwändig ist und die Fertigungsplanung erschwert. Das wiederum führt dazu, dass das Berechnen eines verschnittminimierten Schnittmusters über nur einer relativ kleine Anzahl an Glasscheiben durchgeführt werden kann, was einen erhöhten Verschleiß bedingt. Beim erfindungsgemäßen Verfahren ist das Zwischenlagern vor dem Fertigen der Flachglasscheiben entbehrlich.

Gemäß einer bevorzugten Ausführungsform weist bei einer erfindungsgemäßen Flachglasscheibenfertigungsanlage jeder Lagerbock eine Kennung auf, die eine eindeutige Identifikation des Lagerbocks ermöglicht und die Kommunikationsvorrichtung besitzt eine Mehrzahl an Andockplätzen für jeweils einen Lagerbock und eine Kommunikationsvorrichtung, mittels der die Kennung auslesbar ist, so das für alle Lagerböcke, die an den Andockplätzen angedockt sind, die Belegung aller Lagerplätze der Lagerböcke mit Flachglasscheiben automatisch erfassbar ist. Das ermöglicht eine automatische Kommissionierung durch den Handhabungsroboter, der die zum Gesamtauftrag gehörenden Flachglasscheiben sukzessiv vom richtigen Lagerplatz des richtigen Lagerbocks entnehmen kann.

Günstig ist zudem, wenn jeder Lagerbock eine digitale Speichervorrichtung und eine digitale drahtlose Kommunikationseinrichtung umfasst, wobei beide eingerichtet sind zum Verknüpfen einer Kennung für den Lagerplatz mit einer Kennung für die auf dem Lagerplatz gelagerte Flachglasscheibe. Die Kommissioniervorrichtung besitzt in diesem Fall eine Kommunikationsvorrichtung, mittels der für jeden an der Kommissioniervorrichtung angedockten Lagerbock die jeweilige Flachglasscheibe und ihr Stellplatz erfasst werden kann. Das ermöglicht ein vollautomatisches Entnehmen der jeweils richtigen Flachglasscheibe vom entsprechenden Lagerbock und Anordnen der Flachglasscheibe auf dem Transportgestell.

Im Folgenden wird Erfindung anhand der beigefügten Zeichnungen näher erläutert. Dabei zeigen
- Figur 1: einen Ablauf nach dem Stand der Technik und die
- Figuren 2a und 2b: eine erfindungsgemäße Flachglasscheibenfertigungsanlage zum Durchführen eines erfindungsgemäßen Verfahrens.

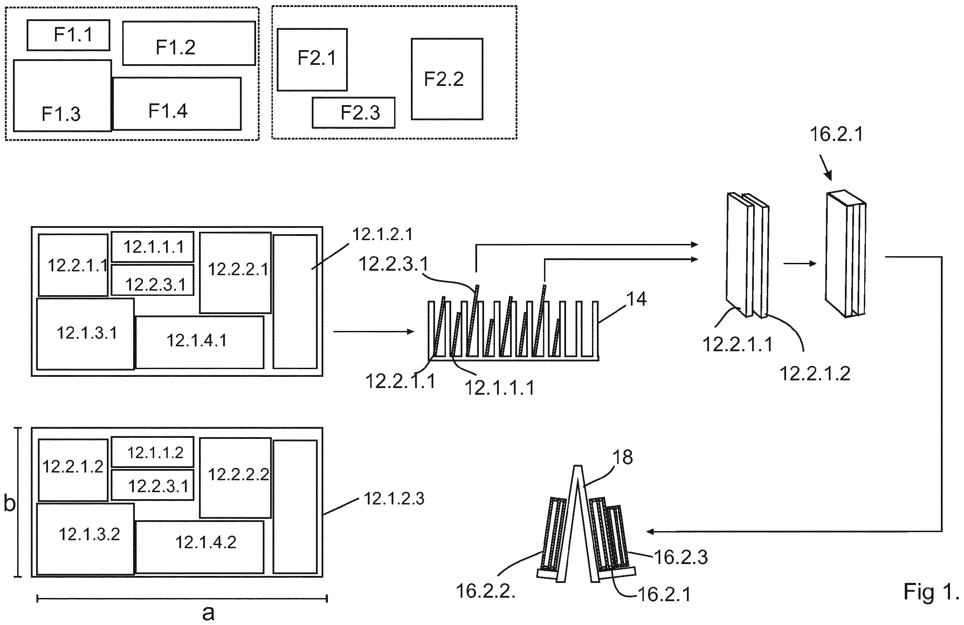

Figur 1 zeigt schematisch, wie ein bisheriges Verfahren zum Herstellen von Flachglasscheiben durchgeführt wird. Zunächst werden mehrere Gesamtaufträge G, im vorliegenden Fall die Gesamtaufträge G1 und G2 erfasst. Schematisch angedeutet umfasst der Gesamtauftrag G1 beispielsweise vier Fertigungsaufträge F1.1, F1.2, F1.3 und F1.4.

Jeder Fertigungsauftrag F, beispielsweise der Fertigungsaufwand F1.1, bezieht sich auf eine Flachglasscheibe mit definierten Abmessungen. Jeder Gesamtauftrag G, muss zu einem bestimmten Zeitpunkt t fertig gestellt sein, beispielsweise der Gesamtauftrag G1 zum Zeitpunkt t₁,. Zudem müssen die zu den Fertigungsaufträgen F gehörenden Flachglasscheiben in einer vorgegebenen Reihenfolge gefertigt werden, im vorliegenden Fall in der Reihenfolge F1.1, F1.2, F1.3, F1.4, um sie so auf ein Transportgestell 18 verladen zu können. Es wird hier der Einfachheit halber davon ausgegangen, dass die Flachglasscheiben aus zwei Glasscheiben aufgebaut sind.

Es wird ein verschnittoptimiertes Schnittmuster für die einzelnen Glasscheiben. Es wird dann für einen Teil der Gesamtaufträge ein verschnittminimiertes Schnittmuster berechnet. In aller Regel hat der Glas-Rohling 10 die Abmessungen 6000 mm x b = 3210 mm. Da jede Flachglasscheibe aus zwei Glasscheiben besteht, werden zwei Glas-Rohlinge 10.1, 10.2 benötigt, die aus dem gleichen Glas bestehen können, nicht aber müssen. Schematisch gezeigt ist das Schnittmuster für alle Fertigungsaufträge F1.1, F1.2, F1.3, F1.4, F2.1, F2.2, F2.3 der Gesamtaufträge G1, G2.

Nach dem Brechen der Glasscheiben 12 (Bezugszeichen ohne Zählsuffix bezeichnen das Objekt als solches) werden die einzelnen Glasscheiben 12 in ein Lager 14 eingelagert, das N₁₄ Lagerplätze hat. Aus diesem Lager 14 werden die einzelnen Glasscheiben entnommen und miteinander zu einer Flachglasscheibe 16 verbunden, wenn abzusehen ist, dass die Flachglasscheibe bald auf ein zugehöriges Transportgestell 18 aufzulagern ist. Im vorliegenden Beispiel entsteht so die Flachglasscheibe 16.2.1, die zum Fertigungsauftrag F2.1 gehört. Diese Flachglasscheibe 16.2.1 wird unmittelbar nach der Fertigung auf das Transportgestell 18 gesetzt und zusammen mit den übrigen Flachglasscheiben 16.2.2 und 16.2.3 des Gesamtauftrags G2 ausgeliefert.

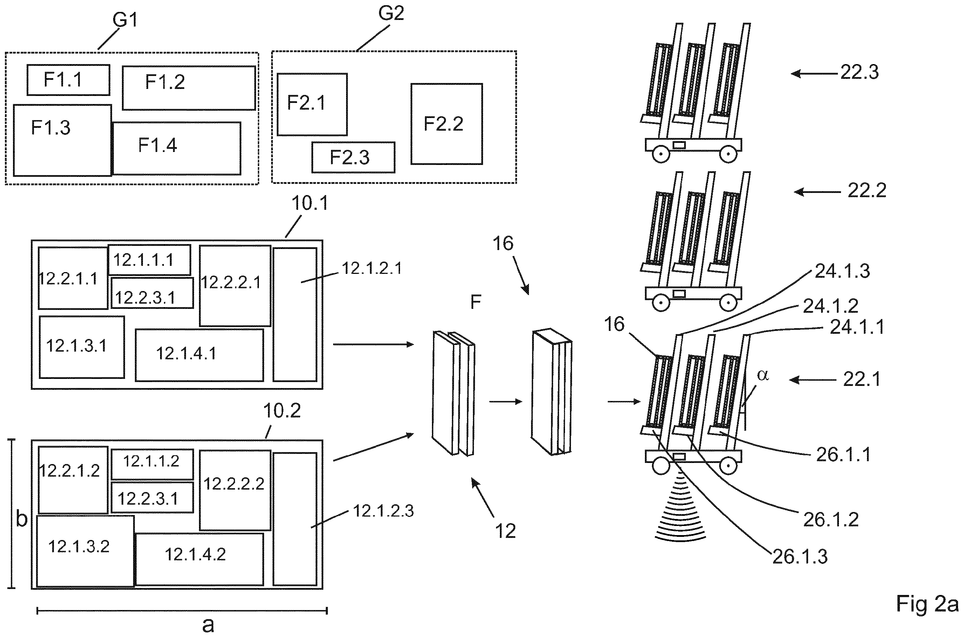

Figur 2a zeigt eine schematische Darstellung eines erfindungsgemäßen Verfahrens. Nach dem Erfassen der Gesamtaufträge G1, G2 wird ein verschnittminimierten Verschnittmuster berechnet, bei dem alle Fertigungsaufträge einbezogen sind. Daher ist der Verschnitt bei einem Glas-Rohling 10 optimal. Danach werden die Glasscheiben gebrochen und gelangen in ein Zwischenlager 20, das eine Lagerkapazität N₂₀ besitzt.

Sobald alle Glasscheiben 12, die zum Fertigen einer Flachglasscheibe 16 benötigt werden, im Zwischenlager 20 vorhanden sind, werden diese entnommen und die Flachglasscheibe 16 daraus hergestellt. Sobald beispielsweise die Glasscheiben 12.1.2.1 und 12.1.2.2 im Zwischenlager vorliegen, werden sie ausgelagert und die Flachglasscheibe 16 gefertigt. Im Vergleich zu der in Figur 1 gezeigten Verfahrensweise muss damit nur so lange gewartet werden, bis alle Glasscheiben für eine Flachglasscheibe im Lager 20 vorhanden sind, nicht aber so lange, bis die Fertigung derjenigen Flachglasscheibe ansteht, die zur Abarbeitung des jeweils nächstfolgenden Fertigungsauftrags notwendig ist. Das Zwischenlager 20 kann daher im Vergleich zum Lager 14 nach dem Stand der Technik sehr klein ausgebildet werden.

Nach der Fertigung der Flachglasscheiben 16 werden diese auf einen bewegbaren Lagerbock 22.1, 22.2, 22.3, ... abgelegt. Jeder Lagerbock 22 besitzt eine Mehrzahl an Stützen 24, die unter einem kleinen Winkel α von beispielsweise 8° zur Vertikalen verlaufen. An jeder Stütze ist eine Auflage 26 befestigt, auf der die jeweilige Flachglasscheibe 16 aufliegt. Die Lagerböcke 22 können selbstfahrend oder zur fremdbetätigten Bewegung ausgebildet sein. Alle Lagerböcke haben gemeinsam N₂₂ Lagerplätze, wobei N₂₂ >2 N₂₀ gilt, insbeondere N₂₂ > 5 N₂₀. Die Lagerböcke können zwischengelagert oder gleich einer Kommissioniervorrichtung zugeführt werden.

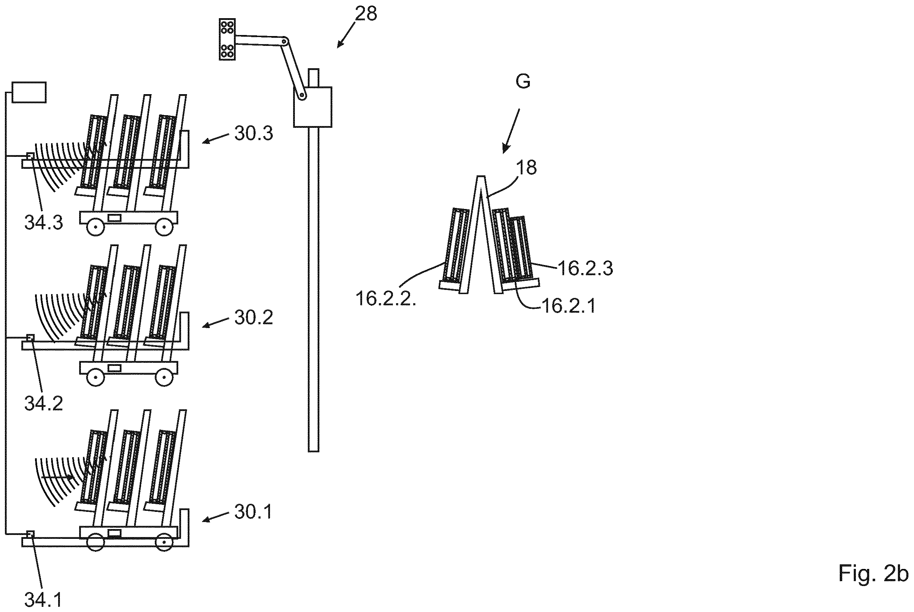

Figur 2b zeigt eine Kommissioniervorrichtung 28, die eine Mehrzahl an Andockplätzen 301., 30.2, ... aufweist. In der Regel hat die Kommissioniervorrichtung 28 eine Vielzahl an Andockplätzen, insbesondere zumindest zehn. Der Einfachheit halber sind in Figur 2b nur drei Plätze gezeigt. Jeder Andockplatz 30 ist so ausgebildet, dass die Position des zugeordneten Lagerbocks 22 relativ zum Andockplatz fest definiert ist. Dazu besitzt jeder Andockplatz 30 beispielsweise einen Anschlag, an den der jeweilige Lagerbock anschlägt und so auf eine definierte Position relativ zum Andockplatz 30 gebracht wird.

Jeder Lagerbock besitzt eine Kennung 32, beispielsweise einen RFID-Transponder oder einen Barcode, der eine eindeutige Identifizierung des Lagerbocks 22 erlaubt. Die Kommissioniervorrichtung 28 besitzt eine Kommunikationsvorrichtung 34, mittels der die Kennung 32 auslesbar ist. Die Kommunikationsvorrichtung 34 kann eine Vielzahl an einzelnen Kommunikationselementen 34.1, 34.2, ... besitzen. Diese sind mit einer zentralen Steuerung 36 verbunden, in der auch die Gesamtaufträge G gespeichert sind.

Je nach Priorität werden die Flachglasscheiben 16 eines Gesamtauftrags G, beispielsweise des Gesamtauftrags G2, dadurch zusammengefasst, dass ein Handhabungsroboter 38 die in der vorgegebenen Reihenfolge des Gesamtauftrages G2 als nächstes vorgesehene Flachglasscheibe von ihrem Lagerplatz auf den Lagerbock 22 entnimmt und auf das Transportgestell 18 ablegt. Auf dem Transportgestell 18 werden alle Flachglasscheiben, die zu einem Gesamtauftrag G gehören, zum Kunden transportiert. Insbesondere erfolgt dieser Transport mittels eines Landfahrzeugs.

Die Kommissioniervorrichtung 28 lagert entnimmt dazu Flachglasscheiben, die für eines der Transportgestelle 18 an der Reihe ist und stellt sie auf dem Transportgestell ab. Ist ein Lagerbock leer, wird er gegen einen wartenden Lagerbock 22.4 ausgetauscht. Ist ein Transportgestell 18 voll beladen, trägt es also alle Flachglasscheiben des ihm zugeordneten Gesamtauftrags, wird es entfernt und gegebenenfalls gegen ein neues Transportgestell ausgetauscht.

Existiert kein Transportgestell, für das eine Flachglasscheibe auf einem der angedockten Lagerböcke 22.1, 22.2, 22.3 vorhanden ist, die an der Reihe ist, , so wird einer der angedockten Lagerböcke 22 abgedockt und derjenige Lagerbock 22.4 angedockt, der die notwendige Flachglasscheibe trägt.

In aller Regel werden mehrere Transportgestelle 18 gleichzeitig beladen, insbesondere drei, vier oder mehr als vier. In diesem Fall werden so lange Flachglasscheiben 16 in der vorgegebenen Reihenfolge auf das richtige Transportgestelle abgelagert, bis es voll beladen ist oder für keines der in der Ladezone 40 angeordneten Transportgestelle eine Flachglasscheibe mehr auf einem der angedockten Lagerböcke vorhanden ist. In diesem Fall wird, wie oben beschrieben, einer der Lagerböcke abgedockt und ein Lagerbock angedockt, der eine Flachglasscheibe trägt, die für ein Transportgestell an der Reihe ist.

Die Ladezone 40 ist die Zone, in der diejenigen Transportgestelle 18 abgestellt sind, die von der Kommissioniervorrichtung 28 zu beladen sind. Kommt ein neues Transportgestell 18.2 hinzu, so meldet es sich entweder automatisch bei der Kommissioniervorrichtung 28 an oder wird von einem Mitarbeiter angemeldet. Die Kommissioniervorrichtung 28 erfasst dann den zum Transportgestell 18.2 gehörenden Gesamtauftrag G2.

### Bezugszeichenliste

- 10: Glas-Rohling
- 12: Glasscheibe
- 14: Lager
- 16: Flachglasscheibe
- 18: Transportgestell

- 20: Zwischenlager
- 22: Lagerbock
- 24: Stütze
- 26: Auflage
- 28: Kommissioniervorrichtung

- 30: Andockplatz
- 32: Kennung
- 34: Kommunikationsvorrichtung
- 36: Steuerung
- 38: Handhabungsroboter

- G: Gesamtauftrag
- F: Fertigungsauftrag
- t: Zeitpunkt
- N: Lagerkapazität
- α: Winkel

## Patentansprüche

1. Verfahren zum Herstellen von Flachglasscheiben, mit den Schritten:
(a) Erfassen einer Mehrzahl an Gesamtaufträgen,
- wobei jeder Gesamtauftrag (G) einen Fertigungsauftrag (F), der sich auf jeweils auf eine Flachglasscheibe (16) bezieht, umfasst, und
- wobei zumindest eine Mehrheit der Gesamtaufträge zumindest zwei Fertigungsaufträge umfasst,
(b) Berechnen eines verschnittminimierten Schnittmusters für die Glasscheiben (10) aus den Fertigungsaufträgen,
(c) Brechen der Glasscheiben (10) gemäß dem Schnittmuster,
(d) Fertigen der Flachglasscheiben (16) aus den Glasscheiben (10) und
(e) nach dem Fertigen der Flachglasscheiben (16) Zwischenlagern der Flachglasscheiben (16) auf individuell bewegbaren Lagerböcken (22),
(f) wobei das Berechnen des verschnittminimierten Schnittmusters ohne Randbedingung in Form einer Position auf dem Transportgestell (18) erfolgt
**dadurch gekennzeichnet, dass**
(g) in dem Gesamtauftrag eine Reihenfolge kodiert ist, mit der die Flachglasscheiben der einzelnen Fertigungsaufträge auf einem Transportgestell angeordnet werden müssen, wobei das Transportgestell Teil eines Lkws ist,
(h) das Verfahren den folgenden Schritt umfasst:
Zusammenstellen der Flachglasscheiben (16), die zu einem Gesamtauftrag (G) gehören, durch
- Bewegens der Lagerböcke zu einer Kommissioniervorrichtung und
- Entnehmen von den bewegbaren Lagerböcken (22) und Anordnen der zu einem Gesamtauftrag (G) gehörenden Flachglasscheiben (16) in der vorgegebenen Reihenfolge auf einem Transportgestell (18),
(i) wobei das Zusammenstellen der Flachglasscheiben (16) die folgenden Schritte umfasst:
- Andocken von zumindest drei Transportgestellen (18) an der Kommissioniervorrichtung (28) und
Erfassen der zu den Transportgestellen gehörenden Gesamtaufträge,
- sukzessives Entnehmen der jeweiligen Flachglasscheiben (16), die zu einem der Fertigungsaufträge gehören, von dem zugeordneten Lagerbock, und Lagern auf dem entsprechenden Transportgestell, so dass für jedes Transportgestell eine vorgegebene Reihenfolge der Flachglasscheiben (16) eingehalten wird,
- wenn für keines der Transportgestelle (18) die jeweils nächste Flachglasscheibe (16) auf einem Lagerbock (22), der an der Kommissioniervorrichtung (28) bereitgestellt ist, vorhanden ist, Ausdocken eines der Transportgestelle (18) und Andocken des Transportgestells (18), das eine Flachglasscheibe (16) trägt, die für ein Transportgestell (18) die nächste Flachglasscheibe (16) ist, und Entnehmen dieser Flachglasscheibe (16) und Lagern auf dem Transportgestell.

2. Verfahren nach Anspruch 1, **dadurch gekennzeichnet, dass** das Fertigen der Flachglasscheiben (16) unmittelbar nach dem Brechen der Glasscheiben (10) erfolgt.

3. Verfahren nach einem der vorstehenden Ansprüche, **dadurch gekennzeichnet, dass** das Berechnen des verschnittminimierten Schnittmusters ohne Randbedingung mit Bezug auf einen Lagerfüllgrad eines Zwischenlagers (20) im Materialfluss nach dem Brechen der Glasscheiben (10) und dem Fertigen der Flachglasscheiben (16) erfolgt.

4. Verfahren nach einem der vorstehenden Ansprüche, **dadurch gekennzeichnet, dass** das Erfassen der Mehrzahl an Gesamtaufträgen ein Erfassen aller Aufträge ist, die in einem vorgegebenen Zeitintervall fertig zu stellen sind.

5. Verfahren nach einem der vorstehenden Ansprüche, **dadurch gekennzeichnet, dass** das Zusammenstellen der Flachglasscheiben (16) die folgenden Schritte umfasst:
- Bewegen der Lagerböcke (22) zu einer Kommissioniervorrichtung (28) und
- Entnehmen der Flachglasscheiben (16) von den Lagerböcken (22) und Lagern der Flachglasscheiben (16) auf zumindest einem Transportgestell (18).

6. Verfahren nach einem der vorstehenden Ansprüche, **dadurch gekennzeichnet, dass** das Zwischenlagern auf einem Lagerbock (22) erfolgt, der
- zumindest eine Stütze (24), die unter einem Winkel (a) von höchstens 10° zur Vertikalen verläuft, und
- eine Auflage, die senkrecht zur Stütze (24) verläuft, aufweist.

7. Verfahren nach Anspruch 6, **dadurch gekennzeichnet, dass**
- jeder Lagerbock (22) eine Mehrzahl an Stützen (24) aufweist und
- das Zwischenlagern so durchgeführt wird, dass höchstens eine Flachglasscheibe (16) auf jeder Stütze (24) angeordnet wird.

8. Verfahren nach einem der vorstehenden Ansprüche, **gekennzeichnet durch** den Schritt: vor dem Fertigen der Flachglasscheiben (16) Aufbringen einer Kratzschutzbeschichtung auf die Glasscheiben (10).

9. Verfahren nach einem der vorstehenden Ansprüche, **dadurch gekennzeichnet, dass** die Umsetzstation zumindest sieben Lagerböcke und insbesondere höchstens zwanzig Lagerböcke aufnimmt.

10. Verfahren nach einem der vorstehenden Ansprüche, **dadurch gekennzeichnet, dass** die Flachglasscheiben aus einer ersten Glasscheibe (10.1) und zumindest einer zweiten Glasscheibe (10.2) aufgebaut sind.

11. Flachglasscheibenfertigungsanlage zum Herstellen von Flachglasscheiben (16) aus einer ersten Glasscheibe (10.1) und zumindest einer zweiten Glasscheibe (10.2), mit:
(a) einer Erfassungsvorrichtung zum Erfassen einer Mehrzahl an Gesamtaufträgen (G),
wobei jeder Gesamtauftrag (G) zumindest einen Fertigungsauftrag (F), der sich auf jeweils eine Flachglasscheibe (16) bezieht, umfasst und
wobei zumindest eine Mehrheit der Gesamtaufträge (G) zumindest zwei Fertigungsaufträge (F) umfasst,
(b) einer Berechnungseinheit zum automatischen Berechnen eines verschnittminimierten Schnittmusters für die Glasscheiben (10) aus den Fertigungsaufträgen (F),
(c) einer Brechvorrichtung zum Brechen der Glasscheiben (10) und
(d) einer Flachglasscheibenfertigungsvorrichtung zum Fertigen der Flachglasscheiben (16) aus den Glasscheiben (10),
(e) einer Zwischenlagervorrichtung, die eine Mehrzahl an individuell bewegbaren Lagerböcken (22) umfasst, die ausgebildet sind zum Aufnehmen der von der Flachglasscheibenfertigungsvorrichtung gefertigten Flachglasscheiben (16),
**gekennzeichnet durch**
(f) eine Kommissioniervorrichtung (28) zum Zusammenstellen der Flachglasscheiben (16), die zu einem Gesamtauftrag (G) gehören, die einen Handhabungsroboter (38) umfasst, der ausgebildet ist zum automatischen
Entnehmen der Flachglasscheiben (16) von den bewegbaren Lagerböcken (22) und
Anordnen der zu einem Gesamtauftrag (G) gehörenden Flachglasscheiben (16) in der vorgegebenen Reihenfolge auf einem Transportgestell (18),
(g) wobei in dem Gesamtauftrag eine Reihenfolge kodiert ist, mit der die Flachglasscheiben der einzelnen Fertigungsaufträge auf einem Transportgestell angeordnet werden müssen und
(h) die Flachglasscheibenfertigungsanlage eingerichtet ist zum Berechnen des verschnittminimierten Schnittmusters ohne Randbedingung in Form einer Position auf dem Transportgestell (18).

12. Flachglasscheibenfertigungsanlage nach Anspruch 11, **dadurch gekennzeichnet, dass**
(g) jeder Lagerbock eine Kennung (32) aufweist, die eine eindeutige Identifikation des Lagerbocks (22) ermöglicht, und
(h) die Kommissioniervorrichtung (28)
- eine Mehrzahl an Andockplätzen (30) für jeweils einen Lagerbock (22)und
- eine Kommunikationsvorrichtung (34), mittels der die Kennung (32) auslesbar ist,
aufweist, so dass für alle Lagerböcke (22), die an den Andockplätzen (30) angedockt sind, die Belegung aller Lagerplätze mit Flachglasscheiben (16) automatisch erfassbar ist.

## Claims

1. A method for producing flat glass panels, comprising the steps:
(a) recording a multitude of complete orders,
- wherein each complete order (G) comprises a production order (F), with each production order relating to one flat glass panel (16), and
- wherein at least at majority of the complete orders comprises at least two production orders,
(b) calculating a cut pattern for the glass panels (10) from the production orders, wherein said cut pattern minimises waste,
(c) breaking the glass panels (10) according to the cut pattern,
(d) producing the flat glass panels (16) from the glass panels (10), and
(e) following the production of the flat glass panels (16), temporarily storing the flat glass panels (16) on individually moveable storage blocks (22),
(f) wherein the calculation of the waste-minimising cut pattern is executed without a boundary condition in the form of a position on the transportation frame (18),
**characterised by** the fact that
(g) an order is encoded in the complete order according to which the flat glass panels of the individual production orders must be arranged on a transportation frame, wherein the transportation frame is part of a truck,
(h) the method comprises the following step:
compiling the flat glass panels (16) that make up a complete order (G) by
- moving the storage blocks to a consignment assembly device and
- removing the moveable storage blocks (22) and arranging the flat glass panels (16) that make up a complete order (G) on a transportation frame (18) in the pre-determined order,
(i) wherein the compilation of the flat glass panels (16) comprises the following steps:
- docking at least three transportation frames (18) with the consignment assembly device (28) and recording the complete orders that belong to the transportation frames,
- successively removing the respective flat glass panels (16), which make up of one of the production orders, from the allocated storage block and storing them on the corresponding transportation frame, such that a pre-determined order of flat glass panels (16) is observed for each transportation frame,
- if there is no transportation frame (18) whose respective next flat glass panel (16) is available on a storage block (22) that is docked at the consignment assembly device (28), undocking of one of the transportation frames (18) and docking of the transportation frame (18) carrying a flat glass panel (16) that is the next flat glass panel (16) for a transportation frame (18), and removing this flat glass panel (16) and storing it on the transportation frame.

2. The method according to claim 1, **characterised by** the fact that the production of the flat glass panels (16) occurs immediately after the breaking of the glass panels (10).

3. The method according to one of the above claims, **characterised by** the fact that the calculation of the waste-minimising cut pattern is conducted, without a boundary condition with regards to a storage filling level of a temporary storage (20) in the direction of material flow, following the breaking of the glass panels (10) and the production of the flat glass panels (16).

4. The method according to one of the above claims, **characterised by** the fact that the recording of the multitude of complete orders is a recording of all orders which are to be prepared in a pre-determined time frame.

5. The method according to one of the above claims, **characterised by** the fact that the compilation of the flat glass panels (16) comprises the following steps:
- moving the storage blocks (22) to a consignment assembly device (28) and
- removing the flat glass panels (16) from the storage blocks (22) and storing the flat glass panels (16) on at least one transportation frame (18).

6. The method according to one of the above claims, **characterised by** the fact that the temporary storage is on a storage block (22) which comprises
- at least one support (24), which runs at a maximum angle (α) of 10° to the vertical, and
- a plate that is perpendicular to the support (24).

7. The method according to claim 6, **characterised by** the fact that
- each storage block (22) comprises a multitude of supports (24) and
- the temporary storage is conducted in such a way that a maximum of one flat glass panel (16) is arranged on each support (24).

8. The method according to one of the above claims, **characterised by** the step:
applying a scratch-resistant coating to the glass panels (10) prior to producing the flat glass panels (16).

9. The method according to one of the above claims, **characterised by** the fact that the transfer station accommodates at least seven storage blocks and, in particular, a maximum of twenty storage blocks.

10. The method according to one of the above claims, **characterised by** the fact that the flat glass panels consist of a first glass panel (10.1) and at least a second glass panel (10.2).

11. A flat glass panel production system for producing flat glass panels (16) from a first glass panel (10.1) and at least a second glass panel (10.2), with:
(a) a recording device for recording a multitude of complete orders (G), wherein each complete order (G) comprises at least one production order (F), with each production order relating to one flat glass panel (16), and wherein at least at majority of the complete orders (G) comprises at least two production orders (F),
(b) a calculation unit for automatically calculating a cut pattern for the glass panels (10) from the production orders (F), wherein said cut pattern minimises waste,
(c) a breaking device for breaking the glass panels (10) and
(d) a flat glass panel production device for producing the flat glass panels (16) from the glass panels (10),
(e) a temporary storage device, which has a multitude of individually moveable storage blocks (22) that are designed to accommodate the flat glass panels (16) produced by the flat glass panel production device,
**characterised by**
(f) a consignment assembly device (28) for compiling the flat glass panels (16) that make up a complete order (G), which comprises a handling robot (38) that is designed to automatically remove the flat glass panels (16) from the moveable storage blocks (22), and arrange the flat glass panels (16) that make up a complete order (G) on a transportation frame (18) in the pre-determined order,
(g) wherein an order is encoded in the complete order, according to which the flat glass panels of the individual production orders must be arranged on a transportation frame, and
(h) the flat glass production system is configured to calculate the waste-minimising cut pattern without a boundary condition in the form of a position on the transportation frame (18).

12. The flat glass panel production system according to claim 11, **characterised by** the fact that
(g) each storage block has an identifier (32) that enables a clear identification of the storage block (22), and
(h) the consignment assembly device (28) comprises
- a multitude of docking points (30), each being for one storage block (22), and
- a communication device (34), by means of which the identifier (32) can be read,
such that, for all storage blocks (22) that are docked at the docking points (30), the occupancy of all storage spaces with flat glass panels (16) can be automatically recorded.

## Revendications

1. Procédé pour la production de vitres en verre plat, comprenant les étapes suivantes consistant à :
(a) saisir une pluralité de commandes globales,
- dans lesquelles chaque commande globale (G) inclut une commande de fabrication (F) qui se rapporte respectivement à une vitre en verre plat (16), et
- dans lesquelles au moins une pluralité des commandes globales inclut au moins deux commandes de fabrication,
(b) calculer un motif de coupe avec minimisation des pertes pour les vitres en verre (10) des commandes de fabrication,
(c) rompre les vitres en verre (10) selon le motif de coupe,
(d) fabriquer des vitres en verre plat (16) à partir des vitres en verre (10), et
(e) après fabrication des vitres en verre plat (16), stocker de façon intermédiaire les vitres en verre plat (16) sur des blocs-supports déplaçables individuellement (22),
(f) dans lequel le calcul du motif de coupe avec minimisation des pertes a lieu sans condition aux limites sous la forme d'une position sur le châssis de transport (18)
**caractérisé en ce que**
(g) dans la commande globale, on code une succession avec laquelle les vitres en verre plat des commandes de fabrication individuelles doivent être agencées sur un châssis de transport, le châssis de transport constituant une partie d'un camion,
(h) le procédé inclut l'étape suivante consistant à :
regrouper les vitres en verre plat (16) qui appartiennent à une commande globale (G),
- en déplaçant les blocs-supports vers un dispositif de préparation de commande et
- en enlevant depuis les blocs-supports déplaçables (22) les vitres en verre plat (16) appartenant à une commande globale (G) et en les agençant dans la succession prédéterminée sur un châssis de transport (18),
(i) dans lequel le regroupement des vitres en verre plat (16) inclut les étapes suivantes consistant à :
- adosser au moins trois châssis de transport (18) contre le dispositif de préparation de commande (28) et
saisir les commandes globales appartenant aux châssis de transport,
- enlever successivement les vitres en verre plat (16) respectives, qui appartiennent à l'une des commandes de fabrication, depuis le bloc-support associé, et les stocker sur le châssis de transport correspondant, de sorte que l'on respecte pour chaque châssis de transport une succession prédéterminée des vitres en verre plat (16),
- s'il n'existe aucun châssis de transport (18) pour lequel la vitre en verre plat suivante de celui-ci (16) a été mise à disposition sur un support (22) adossé au dispositif de préparation de commande (28), détacher l'un des châssis de transport (18) et adosser le châssis de transport (18) qui porte une vitre en verre plat (16) qui est la vitre en verre plat (16) suivante pour un châssis de transport, et enlever cette vitre en verre plat (16) et la stocker sur le châssis de transport.

2. Procédé selon la revendication 1, **caractérisé en ce que** la fabrication des vitres en verre plat (16) a lieu immédiatement après la rupture des vitres en verre (10).

3. Procédé selon l'une des revendications précédentes, **caractérisé en ce que** le calcul du motif de coupe avec minimisation des pertes a lieu sans condition aux limites par référence à un degré de remplissage d'un stockage intermédiaire (20) dans le flux des matières après la rupture des vitres en verre (10) et la fabrication des vitres en verre plat (16).

4. Procédé selon l'une des revendications précédentes, **caractérisé en ce que** la saisie de la pluralité de commandes globales est une saisie de toutes les commandes qu'il s'agit de finir dans un intervalle temporel prédéterminé.

5. Procédé selon l'une des revendications précédentes, **caractérisé en ce que** le regroupement des vitres en verre plat (16) inclut les étapes suivantes consistant à :
- déplacer les blocs-supports (22) vers un dispositif de préparation de commande (28), et
- enlever les vitres en verre plat (16) depuis les blocs-supports (22) et déposer les vitres en verre plat (16) sur au moins un châssis de transport (18).

6. Procédé selon l'une des revendications précédentes, **caractérisé en ce que** le stockage intermédiaire a lieu sur un bloc-support (22) qui comprend
- au moins un soutien (24) qui s'étend sous un angle (α) de 10° au maximum par rapport à la verticale, et
- un appui, qui s'étend perpendiculairement au soutien (24).

7. Procédé selon la revendication 6, **caractérisé en ce que**
- chaque bloc-support (22) comprend une pluralité de soutiens (24), et
- le stockage intermédiaire est effectué de telle manière que tout au plus une vitre en verre plat (16) est agencée sur chaque soutien (24).

8. Procédé selon l'une des revendications précédentes, **caractérisé par** l'étape consistant à, avant la fabrication des vitres en verre plat (16), appliquer un revêtement de protection anti-rayures sur les vitres en verre (10).

9. Procédé selon l'une des revendications précédentes, **caractérisé en ce que** la station de transfert abrite au moins sept blocs-supports et en particulier au plus vingt blocs-supports.

10. Procédé selon l'une des revendications précédentes, **caractérisé en ce que** les vitres en verre plat sont constituées d'une première vitre en verre (10.1) et d'au moins une deuxième vitre en verre (10.2).

11. Installation de fabrication de vitres en verre plat pour la production de vitres en verre plat (16) constituées d'une première vitre en verre (10.1) et d'au moins une deuxième vitre en verre (10.2), comprenant :
(a) un dispositif de saisie pour saisir une pluralité de commandes globales (G),
dans lesquelles chaque commande globale (G) inclut au moins une commande de fabrication (F) qui se rapporte à une vitre en verre plat (16) respective, et
dans lesquelles au moins une majeure partie des commandes globales (G) inclut au moins deux commandes de fabrication (F),
(b) une unité de calcul pour calculer automatiquement un motif de coupe avec minimisation des pertes pour les vitres en verre (10) des commandes de fabrication (F),
(c) un dispositif de rupture pour rompre les vitres en verre (10), et
(d) un dispositif de fabrication de vitres en verre plat pour fabriquer les vitres en verre plat (16) à partir des vitres en verre (10),
(e) un dispositif de stockage intermédiaire, qui inclut une pluralité de blocs-supports (22) déplaçables individuellement, qui sont réalisés pour recevoir les vitres en verre plat (16) fabriquées par le dispositif de fabrication de vitres en verre plat,
**caractérisée par**
(f) un dispositif de préparation de commande (28) pour regrouper les vitres en verre plat (16) qui appartiennent à une commande globale (G), qui inclut un robot de manutention (38), lequel est réalisé pour
enlever automatiquement les vitres en verre plat (16) depuis les blocs-support (22) déplaçables, et
agencer automatiquement les vitres en verre plat (16) appartenant à une commande globale (G) dans la succession prédéterminée sur un châssis de transport (18),
(g) dans la commande globale une succession est codée avec laquelle les vitres en verre plat des commandes de fabrication individuelles doivent être agencées sur un châssis de transport, et
(h) l'installation de fabrication de vitres en verre plat est conçue pour calculer le motif de coupe avec minimisation des pertes sans condition aux limites sous la forme d'une position sur le châssis de transport (18).

12. Installation de fabrication de vitres en verre plat selon la revendication 11, **caractérisée en ce que**
(g) chaque bloc-support comporte un identifiant, qui permet une identification univoque du bloc-support (22), et
(h) le dispositif de préparation de commande (28) comprend
- une multiplicité d'emplacements d'adossement (30) pour un bloc-support (22) respectif, et
- un dispositif de communication (34) au moyen duquel l'identifiant (32) peut être lu,
de sorte que pour tous les blocs-supports (22) qui sont adossés aux emplacements d'adossement (30), l'occupation de tous les emplacements de stockage avec des vitres en verre plat (16) peut être automatiquement saisie.
